# EUROPEAN PATENT SPECIFICATION

(11) **EP 4 646 352 B1**
(45) Date of publication and mention of the grant of the patent: **07.10.2026**
(21) Application number: 23702933.5
(22) Date of filing: 02.01.2023
(51) Int. Cl.: B60T 17/22, B60T 15/56, B60T 13/22, B60T 13/66, B60T 8/18

(54) **A BRAKE SYSTEM FOR A MINING MACHINE**
BREMSSYSTEM FÜR EINE ABBAUMASCHINE
SYSTÈME DE FREIN POUR ENGIN D'EXPLOITATION MINIÈRE

(43) Date of publication of application: 12.11.2025
(73) Proprietor: Epiroc Rock Drills Aktiebolag, 701 91 Örebro (SE)
(72) Inventor: BAGGE, Markus, 703 43 Örebro (SE)
(74) Representative: Epiroc Rock Drills AB
(86) International application number: PCT/SE2023/050002
(87) International publication number: WO 2024/147749

(56) References cited:
- EP-A1- 3 832 033
- DE-A1- 19 629 426
- US-A1- 2018 304 877
- US-A1- 2021 086 738

## Description

### TECHNICAL FIELD

The present invention relates to hydraulic brake systems for mining machines, such as LHD:s (loader hauler dumpers), concrete spraying machines, drilling rigs and/or bolting rigs, or other types of vehicles configured to perform work operations in a mining environment.

### BACKGROUND OF THE INVENTION

A mining machine may be provided with hydraulic brakes for applying braking torque to halt the mining machine. Some mining machines are provided with brake discs and hydraulically operated brakes for applying braking torque to the respective brake discs. Some machines use brakes which are hydraulically applied. Another type of brake is the spring applied hydraulically released brake (SAHR), in which one or more springs apply the braking torque, wherein the brakes are released by a force acting against the action of the spring, said force being applied using one or more hydraulic cylinders connected to a hydraulic circuit.

A common problem with hydraulically controlled brakes is air trapped in the hydraulic circuit, causing poor or unpredictable performance. Air is usually removed from the hydraulic circuit using a bleeding procedure in which a bleed valve located at the brake is manually opened wherein hydraulic fluid is forced out of the bleed valve together with any air trapped in the hydraulic system. Usually, a hose is connected to the bleed valve to catch the expelled hydraulic fluid wherein the bleed valve is closed at the end of the bleeding procedure. This procedure is repeated for each brake and the bleeding procedure is time consuming and cumbersome. Since the procedure is time consuming, people tend to refrain from bleeding their brakes and the brake system may be operated with trapped air for long periods of time. As the brakes are used, particles may be released into the hydraulic circuit over time, causing wear and introducing a higher risk of poor braking performance or failure.

A hydraulic system for an electric working vehicle or hybrid working vehicle is known from EP 3 832 033 A1.

### SUMMARY OF THE INVENTION

An object of the invention is to enable easier removal of air from a hydraulically operated brake system. Another object is to mitigate particles in the hydraulic brake system.

According to a first aspect of the present disclosure, these and other objects are achieved by a brake system as defined in claim 1, with alternative embodiments defined in dependent claims 2-11 and in the following description. The brake system comprises at least one spring applied hydraulically releasable brake (SAHR brake), a brake fluid reservoir, and a first fluid circuit fluidly connecting the SAHR brake to the brake fluid reservoir via an actuator. The actuator is adapted to control a pressure of brake fluid in the first fluid circuit. The brake system further comprises a pressure relief valve adapted to open a fluid path between an inlet of the pressure relief valve and an outlet of the pressure relief valve in response to fluid pressure at the inlet of the pressure relief valve exceeding an opening pressure higher than a release pressure of the SAHR brake. The pressure relief valve is further adapted to close in response to a fluid pressure at the inlet of the pressure relief valve subceeding the opening pressure, and wherein the inlet of the pressure relief valve is fluidly connected to the SAHR brake such that the SAHR brake is bleedable through the pressure relief valve.

At normal operation of the SAHR brake for controlling the vehicle, the SAHR brake can be controlled by varying the fluid pressure in the first fluid circuit to disengage the SAHR brake by increasing the pressure above the release pressure and by reducing the fluid pressure in the first fluid circuit to a pressure below the release pressure such that the spring of the SAHR brake brings the brake into engagement with the brake disc. In order to bleed trapped air from the SAHR brake, the pressure in the first fluid circuit is increased above the opening pressure of the pressure relief valve, thereby opening the pressure relief valve wherein fluid and trapped gas/air is forced out through the pressure relief valve. During bleeding of the SAHR brake, the SAHR brake is thus disengaged from the brake disc. Such a brake system thus enables bleeding without manual opening of a bleed valve, which in turn typically requires removal of a wheel to be able to access the bleed valve.

The brake system may further comprise a second fluid circuit fluidly connecting the outlet of the pressure relief valve to the brake fluid reservoir.

The provision of the second fluid circuit enables brake fluid to be routed back to the brake fluid reservoir, thus preventing brake fluid from draining straight out on ground below the vehicle, and enabling re-use of brake fluid without manual collection from the outlet of the pressure relief valve.

The second fluid circuit may comprise a filter adapted to enable brake fluid to pass through the filter and adapted to catch particles in the brake fluid.

The filter catches particles in the brake fluid and thus reduces wear of moving parts of the brake system, prolonging the lifetime of the brake fluid and reducing the frequency of change of brake fluid.

The filter may be adapted to catch particles larger than 10 µm, such as particles larger than 20 µm.

The pressure relief valve may be adapted to enable a fluid flow of at least five liters per minute to pass through the pressure relief valve when the pressure at the inlet of the pressure relief valve reaches its opening pressure.

A fluid flow of at least five liters per minute is higher than what is typically possible using manually opened bleed valves. The higher flow rate of the brake fluid promotes improved evacuation of trapped gas/air in the SAHR brake and thus enables improved bleeding performance.

The brake system may further comprise an electronic control unit adapted to control the actuator in response to a control signal to thereby control fluid pressure in the first fluid circuit.

The electronic control unit (ECU) enables electronic signals to control bleeding of the system, for example an electronic signal provided by manual input or according to logic programmed in the ECU.

In addition to the electronic control unit, the brake system may further comprise a manually operable input device adapted to trigger the control signal in response to manual operation of the input device.

The manually operable input device enables a person to physically interact with the input device to trigger bleeding.

The electronic control unit may be adapted to control the actuator such that the fluid pressure is increased to, or above, the opening pressure of the pressure relief valve at regular intervals and/or according to a predetermined schedule.

Such configuration of the ECU enables automatic bleeding of the brake system.

The brake system may further comprise a temperature sensor adapted to measure a temperature of brake fluid in the brake system, wherein the electronic control unit is adapted to control the actuator such that the fluid pressure is increased to, or above, the opening pressure of the pressure relief valve in response to the temperature of the brake fluid measured by the sensor reaching a first temperature threshold, and to reduce the pressure below the opening pressure of the pressure relief valve after a first predetermined period of time.

In any embodiment disclosed herein, the fluid reservoir of the brake system may be fluidly connected to a hydraulic circuit for powering one or more auxiliary devices, one or more hydraulic steering actuators (e.g. hydraulic cylinders), and/or one or more hydraulically powered traction motors of the vehicle, using the same hydraulic fluid as is used as said brake fluid.

As the vehicle is operated, the temperature of the brake fluid gradually increases. For vehicles which use the same hydraulic fluid for the brake fluid of the brake system as for powering other functions of the vehicle, such as auxiliary devices, hydraulic steering actuators, hydraulically powered motors, etc., the temperature increase of the hydraulic fluid (brake fluid) upon operation of the vehicle is largely caused by heat generated by the auxiliary devices, hydraulic steering actuators, hydraulically powered motors, etc.

When the temperature sensed by the temperature sensor reaches the first temperature threshold, the ECU automatically performs bleeding of the brake system for a predetermined period of time. Hence, when the vehicle is not in use, the temperature of the brake fluid does not rise, and the automatic bleeding is not performed. Bleeding is triggered when the temperature rises from a temperature below the first temperature threshold and reaches the first temperature threshold. Bleeding is not triggered by the temperature of the brake fluid merely being above the first temperature threshold, and also not triggered when the temperature of the brake fluid decreases from a temperature above the first temperature threshold and reaches the first temperature threshold.

The temporary bleeding based on temperature increase of the brake fluid saves energy and provides shortened brake reaction time, since the brakes are only bled for limited time, as opposed to an alternative embodiment using continuous bleeding of the brake system. Further, the temperature of the brake fluid affects the viscosity of the brake fluid. A higher brake fluid temperature leads to lower viscosity of the brake fluid, and lower air/gas content in the brake fluid. Similarly, lower viscosity of the brake fluid increases the brake reaction times since resistance in fluid circuits increases. Hot brake fluid dissolves less air/gas than colder brake fluid. As temperature of the brake fluid increases, dissolved air is released. It is advantageous to get rid of gas/air in the hydraulic circuits to stiffen the brake system and thereby achieve improved controllability of the brake system and of any vehicle on which the brake system is installed. The first temperature threshold is usually set rather low, to quickly increase the temperature of brake fluid in the brake system. Also, the choice of the first temperature threshold should be adapted to match the viscosity vs. temperature profile of the brake fluid of choice.

The temperature sensor may be adapted to measure the temperature of brake fluid in the brake fluid reservoir of the brake system.

As the SAHR brake is operated, an amount of brake fluid is pumped back and forth to the fluid reservoir through the first fluid circuit. By measuring the temperature of brake fluid in the brake fluid reservoir, a more even temperature reading is achieved, since the amount of brake fluid pumped, is mixed with brake fluid in the brake fluid reservoir. For vehicles which use the same hydraulic fluid for the brake system as for powering other functions of the vehicle, such as auxiliary devices, hydraulic steering actuators, hydraulically powered motors, etc., the temperature increase of the hydraulic fluid is noticeable in the brake fluid reservoir since fluid used to power the other functions, such as auxiliary devices, hydraulic steering actuators, hydraulically powered motors, etc., is circulated through the brake fluid reservoir. Measuring temperature of the brake fluid in the brake fluid reservoir gives a good indication of the temperature of the hydraulic fluid which is routed through the brake system to flush out any colder brake fluid, such that timely bleeding of warmer brake fluid is enabled.

In an embodiment, a Shell Tellus TD46 is used as brake fluid/hydraulic fluid, wherein the first temperature threshold is set to 5 degrees Centigrade and the second temperature threshold is set to 45 degrees Centigrade.

The electronic control unit may be adapted to control the actuator such that the fluid pressure is increased to, or above, the opening pressure of the pressure relief valve in response to the temperature of the brake fluid measured by the temperature sensor reaching a second temperature threshold higher than the first temperature threshold, and to reduce the pressure below the opening pressure of the pressure relief valve after a second predetermined period of time.

By triggering bleeding of the brake system also upon reaching a second temperature threshold higher than the first temperature threshold, the system is able to react differently to low temperature increase as compared to high temperature increases and thus trigger additional bleeding of the brake system at intensive operation of a vehicle leading to . The relationship between viscosity of a hydraulic fluid and temperature of the hydraulic fluid is typically non-linear. The viscosity of the brake fluid rapidly decreases upon further temperature increase above the first temperature threshold. Likewise, too low temperature of the brake fluid should be avoided, since it increases the viscosity of the brake fluid, thereby making the brake system less more difficult to operate, also requiring more energy to operate. By bleeding the brake system at the first temperature threshold (i.e. the lower temperature threshold as compared to the second temperature threshold), the function of the brake system is improved soon after operation of a vehicle commences, since warmer brake fluid is moved from the brake fluid reservoir to the SAHR brake, thereby replacing higher-viscosity brake fluid in the brake system with lower-viscosity brake fluid. By bleeding the brake system also at the higher temperature governed by the second temperature threshold, gas released from the brake fluid is flushed out of the brake system.

According to a second aspect of the present disclosure, the above mentioned objects are also achieved by a mining machine comprising the above described brake system.

### BRIEF DESCRIPTION OF THE DRAWINGS

Fig. 1 shows a schematic view of a first embodiment of a brake system according to the present disclosure.
Fig. 2 shows a schematic view of a second embodiment of the brake system, further including a return conduit for brake fluid from the pressure-relief valve to the brake fluid reservoir and a filter provided on the return conduit.
Fig. 3 shows a schematic view of a third embodiment of the brake system, further comprising an electronic control unit.

### DETAILED DESCRIPTION

Embodiments of the present disclosure will hereinafter be described with reference to the appended drawings.

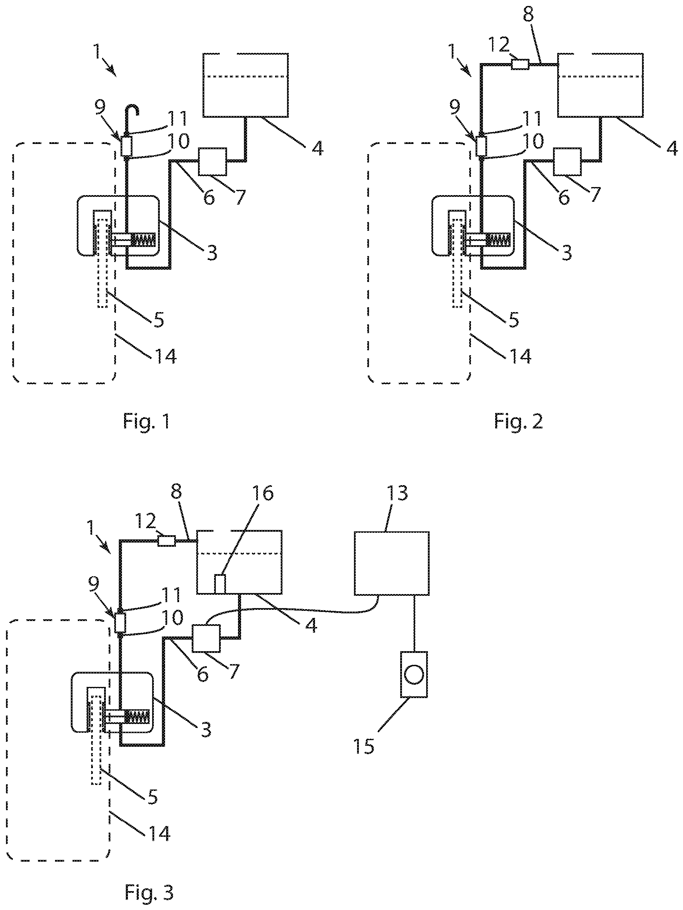

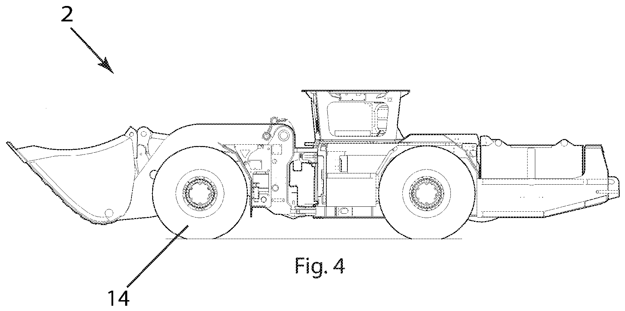

As shown in fig. 1, a brake system 1 according to a first embodiment comprises at least one spring applied hydraulically releasable brake (SAHR brake) 3, a brake fluid reservoir 4, and a first fluid circuit 6 fluidly connecting the SAHR brake 3 to the brake fluid reservoir 4 via an actuator 7. The actuator 7 is adapted to control a pressure of brake fluid in the first fluid circuit 6. The brake system 1 further comprises a pressure relief valve 9. The pressure relief valve 9 is adapted to open a fluid path between an inlet 10 of the pressure relief valve 9 and an outlet 11 of the pressure relief valve 9 in response to fluid pressure at the inlet of the pressure relief valve exceeding an opening pressure higher than a release pressure of the SAHR brake 3. The pressure relief valve 9 is further adapted to close in response to a fluid pressure at the inlet 10 of the pressure relief valve 9 subceeding the opening pressure. The inlet 10 of the pressure relief valve 9 is fluidly connected to the SAHR brake 3 such that the SAHR brake 3 is bleedable through the pressure relief valve 9. Since any gas/air trapped in the SAHR brake 3 rises in the brake fluid, the pressure relief valve typically connects to the SAHR brake 3 at an upper portion of the SAHR brake 3, such that as much gas/air as possible is bled out of the SAHR brake 3 before brake fluid at bleeding of the SAHR brake 3.

A shown in fig. 1, the SAHR brake 3 is typically used in conjunction with a brake disc 5 connected to a wheel of a mining machine 2 for controlling braking force applied to the brake disc 5 by the SAHR brake.

The actuator 7 may be any suitable type of actuator, such as an electrically powered pump or a manually powered pump. In embodiments in which the actuator 7 is used together with an electronic control unit 13, the actuator 7 comprises an electrically powered pump.

Upon bleeding of this brake system 1, the pressure of the brake fluid is increased above the opening pressure, wherein brake fluid and/or air/gas from the SAHR brake 3 is forced out of the outlet 11 of the pressure relief valve 9. Brake fluid forced out of the outlet 11 is preferably collected and disposed.

A second embodiment of the brake system 1 is shown in fig. 2. This embodiment comprises all features of the first embodiment and further comprises a second fluid circuit 8 fluidly connecting the outlet 11 of the pressure relief valve 9 to the brake fluid reservoir 4. The second fluid circuit 8 enables brake fluid and/or gas/air forced out of the outlet 11 to be routed to the brake fluid reservoir 4, thus obliviating any need of manual effort for collecting the brake fluid.

In this embodiment, the second fluid circuit 8 also comprises a filter 12 adapted to enable brake fluid to pass through the filter 12 and adapted to catch particles in the brake fluid. In other embodiments, the filter 12 may alternatively be omitted.

The filter 12 is preferably adapted to catch particles larger than 10 µm, such as particles larger than 20 µm although any other suitable filter could alternatively be used instead.

In all embodiments of the present disclosure, the pressure relief valve 9 may be adapted to enable a fluid flow of at least five liters per minute to pass through the pressure relief valve 9 when the pressure at the inlet of the pressure relief valve 9 reaches its opening pressure. A fluid flow of at least five liters per minute is higher than what is typically possible using manually opened bleed valves. The higher flow rate of the brake fluid promotes improved evacuation of trapped gas/air in the SAHR brake 3 and thus enables improved bleeding performance.

A third embodiment of the brake system 1 is shown in fig. 3. This embodiment comprises all features of the second embodiment and further comprises an electronic control unit 13 adapted to control the actuator 7 in response to a control signal S to thereby control fluid pressure in the first fluid circuit 6. The electronic control unit 13 could also be used with the first embodiment. The electronic control unit 13 may alternatively be omitted, wherein the fluid pressure in the brake system 1 is controlled using any other suitable means, such as using a manually operated circuit breaker controlling the actuator 7 or using manual operation of a manually powered pump controlling fluid pressure in the first fluid circuit 6.

In embodiments comprising an electronic control unit 13, the brake system 1 may comprise a manually operable input device 16 adapted to trigger the control signal S in response to manual operation of the input device 16. The manually operable input device 16 may be an electronic circuit breaker, a mobile device, such as a smartphone, or a touch screen enabling user input. Any other suitable manually operable input means could alternatively be used instead. The manually operable input device 16 may be adapted to communicate with the electronic control unit 13 using a wired connection or using a wireless connection.

The electronic control unit 13 may be adapted to control the actuator 7 such that the fluid pressure is increased to, or above, the opening pressure of the pressure relief valve 9 at regular intervals and/or according to a predetermined schedule.

In the third embodiment, the brake system 1 further comprises a temperature sensor 16 adapted to measure a temperature of brake fluid in the brake system 1, wherein the electronic control unit 13 is adapted to control the actuator 7 such that the fluid pressure is increased to, or above, the opening pressure of the pressure relief valve 9 in response to the temperature of the brake fluid measured by the temperature sensor 16 reaching a first temperature threshold T1, and to reduce the pressure below the opening pressure of the pressure relief valve 9 after a first predetermined period of time. In other embodiments, the temperature sensor 16 may be omitted, wherein the electronic control unit 13 is not adapted to control fluid pressure based on temperature.

In the third embodiment, the temperature sensor 16 is adapted to measure the temperature of brake fluid in the brake fluid reservoir 4 of the brake system 1. In other embodiments, the temperature sensor 16 may alternatively be positioned in any other suitable position in the brake system 1.

The electronic control unit 13 may be adapted to control the actuator 7 such that the fluid pressure is increased to, or above, the opening pressure of the pressure relief valve 9 in response to the temperature of the brake fluid measured by the temperature sensor 16 reaching a second temperature threshold T2 higher than the first temperature threshold T1, and to reduce the pressure below the opening pressure of the pressure relief valve 9 after a second predetermined period of time.

Also proposed is a mining machine 2 comprising the brake system 1 according to any one of the above described embodiments. The mining machine 2 may be any type of vehicle adapted to perform work operations in a mining environment, such as a LHD (loader hauler dumper), a concrete spraying machine, a drilling rig and/or a bolting rig.

**Table of reference numerals**

| | |
|---|---|
| 1 | brake system |
| 2 | mining machine |
| 3 | spring applied hydraulically releasable brake (SAHR brake) |
| 4 | brake fluid reservoir |
| 5 | brake disc |
| 6 | first fluid circuit |
| 7 | actuator |
| 8 | second fluid circuit |
| 9 | pressure relief valve |
| 10 | inlet of pressure relief valve |
| 11 | outlet of pressure relief valve |
| 12 | filter |
| 13 | electronic control unit |
| 14 | wheel |
| 15 | manually operable input device |
| 16 | temperature sensor |

## Claims

1. A brake system (1) for a mining machine (2), said brake system (1) comprising:
at least one spring applied hydraulically releasable brake (SAHR brake) (3),
a brake fluid reservoir (4),
a first fluid circuit (6) fluidly connecting the SAHR brake (3) to the brake fluid reservoir 4 via an actuator (7), said actuator (7) being adapted to control a pressure of brake fluid in the first fluid circuit (6),
wherein the brake system (1) comprises a pressure relief valve (9), **characterized in that** the pressure
relief valve (9) is adapted to open a fluid path between an inlet (10) of the pressure relief valve (9) and an outlet (11) of the pressure relief valve (9) in response to fluid pressure at the inlet of the pressure relief valve exceeding an opening pressure higher than a release pressure of the SAHR brake (3), wherein the pressure relief valve (9) is further adapted to close in response to a fluid pressure at the inlet (10) of the pressure relief valve (9) subceeding the opening pressure , and wherein the inlet (10) of the pressure relief valve (9) is fluidly connected to the SAHR brake (3) such that the SAHR brake (3) is bleedable through the pressure relief valve (9).

2. The brake system (1) according to claim 1, wherein the brake system (1) further comprises a second fluid circuit (8) fluidly connecting the outlet (11) of the pressure relief valve (9) to the brake fluid reservoir (4).

3. The brake system (1) according to claim 2, wherein the second fluid circuit (8) comprises a filter (12) adapted to enable brake fluid to pass through the filter (12) and adapted to catch particles in the brake fluid.

4. The brake system (1) according to claim 3, wherein the filter (12) is adapted to catch particles larger than 10 µm, such as particles larger than 20 µm.

5. The brake system (1) according to any one of claims 1-4, wherein the pressure relief valve (9) is adapted to enable a fluid flow of at least five liters per minute to pass through the pressure relief valve (9) when the pressure at the inlet of the pressure relief valve (9) reaches its opening pressure .

6. The brake system (1) according to any one of claims 1-5, further comprising an electronic control unit (13) adapted to control the actuator (7) in response to a control signal to thereby control fluid pressure in the first fluid circuit (6).

7. The brake system (1) according to claim 6, further comprising a manually operable input device (15) adapted to trigger the control signal in response to manual operation of the input device (15).

8. The brake system (1) according to any one of claims 6-7, wherein the electronic control unit (13) is adapted to control the actuator (7) such that the fluid pressure is increased to, or above, the opening pressure of the pressure relief valve (9) at regular intervals and/or according to a predetermined schedule.

9. The brake system (1) according to claim any one of claims 6-8, further comprising a temperature sensor (16) adapted to measure a temperature of brake fluid in the brake system (1), wherein the electronic control unit (13) is adapted to control the actuator (7) such that the fluid pressure is increased to, or above, the opening pressure of the pressure relief valve (9) in response to the temperature of the brake fluid measured by the sensor (16) reaching a first temperature threshold (T1), and to reduce the pressure below the opening pressure of the pressure relief valve (9) after a first predetermined period of time.

10. The brake system (1) according to claim 9, wherein the temperature sensor (16) is adapted to measure the temperature of brake fluid in the brake fluid reservoir (4) of the brake system (1).

11. The brake system (1) according to claim 10, wherein the electronic control unit (13) is adapted to control the actuator (7) such that the fluid pressure is increased to, or above, the opening pressure of the pressure relief valve (9) in response to the temperature of the brake fluid measured by the temperature sensor (16) reaching a second temperature threshold (T2) higher than the first temperature threshold (T1), and to reduce the pressure below the opening pressure of the pressure relief valve (9) after a second predetermined period of time.

12. A mining machine (2) comprising the brake system (1) according to any one of claims 1-11.

## Patentansprüche

1. Bremssystem (1) für eine Abbaumaschine (2), wobei das Bremssystem (1) Folgendes umfasst:
mindestens eine federbetätigte, hydraulisch lösbare Bremse (SAHR-Bremse) (3),
ein Bremsfluidreservoir (4),
einen ersten Fluidkreislauf (6), der die SAHR-Bremse (3) über einen Aktuator (7) mit dem Bremsfluidreservoir 4 fluidisch verbindet, wobei der Aktuator (7) adaptiert ist, um den Druck des Bremsfluids im ersten Fluidkreislauf (6) zu steuern,
wobei das Bremssystem (1) ein Überdruckventil (9) umfasst, **dadurch gekennzeichnet, dass** das Überdruckventil (9) adaptiert ist, um einen Fluidweg zwischen einem Einlass (10) des Überdruckventils (9) und einem Auslass (11) des Überdruckventils (9) zu öffnen, als Antwort auf den Fluiddruck am Einlass des Überdruckventils, der einen Öffnungsdruck größer als ein Überdruck der SAHR-Bremse (3) überschreitet, wobei das Überdruckventil (9) weiter adaptiert ist, um sich zu schließen, als Antwort auf den Fluiddruck am Einlass (10) des Überdruckventils (9), der den Öffnungsdruck überschreitet, und wobei der Einlass (10) des Überdruckventils (9) mit der SAHR-Bremse (3) fluidisch verbunden ist, sodass die SAHR-Bremse (3) über das Überdruckventil (9) entlüftet werden kann.

2. Bremssystem (1) nach Anspruch 1, wobei das Bremssystem (1) weiter einen zweiten Fluidkreislauf (8) umfasst, der den Auslass (11) des Überdruckventils (9) mit dem Bremsfluidreservoir (4) fluidisch verbindet.

3. Bremssystem (1) nach Anspruch 2, wobei der zweite Fluidkreislauf (8) einen Filter (12) umfasst, der adaptiert ist, um Bremsflüssigkeit zu ermöglichen, durch den Filter (12) zu passieren, und der adaptiert ist, um Partikel in dem Bremsfluid zu fangen.

4. Bremssystem (1) nach Anspruch 3, wobei der Filter (12) adaptiert ist, um Partikel größer als 10 µm, wie Partikel größer als 20 µm, zu fangen.

5. Bremssystem (1) nach einem der Ansprüche 1-4, wobei das Überdruckventil (9) adaptiert ist, um einem Fluidstrom von mindestens fünf Litern pro Minute zu ermöglichen, durch das Überdruckventil (9) zu passieren, wenn der Druck am Einlass des Überdruckventils (9) dessen Öffnungsdruck erreicht.

6. Bremssystem (1) nach einem der Ansprüche 1-5, weiter umfassend eine elektronische Steuereinheit (13), die adaptiert ist, um den Aktuator (7) als Antwort auf ein Steuersignal zu steuern, um dadurch den Fluiddruck im ersten Fluidkreislauf (6) zu steuern.

7. Bremssystem (1) nach Anspruch 6, weiter umfassend eine manuell betätigbare Eingabevorrichtung (15), die adaptiert ist, um das Steuersignal als Antwort auf eine manuelle Betätigung der Eingabevorrichtung (15) auszulösen.

8. Bremssystem (1) nach einem der Ansprüche 6-7, wobei die elektronische Steuereinheit (13) adaptiert ist, um den Aktuator (7) so zu steuern, dass der Fluiddruck in regulären Intervallen und/oder nach einem vorbestimmten Zeitplan auf den Öffnungsdruck des Überdruckventils (9) oder darüber erhöht wird.

9. Bremssystem (1) nach einem der Ansprüche 6-8, weiter umfassend einen Temperatursensor (16), der adaptiert ist, um eine Temperatur des Bremsfluids im Bremssystem (1) zu messen, wobei die elektronische Steuereinheit (13) adaptiert ist, um den Aktuator (7) so zu steuern, dass der Fluiddruck auf oder über den Öffnungsdruck des Überdruckventils (9) erhöht wird, als Antwort auf die vom Sensor (16) gemessene Temperatur des Bremsfluids, die einen ersten Temperaturschwellenwert (T1) erreicht, und um den Druck nach Ablauf eines ersten vorbestimmten Zeitraums unter den Öffnungsdruck des Überdruckventils (9) zu reduzieren.

10. Bremssystem (1) nach Anspruch 9, wobei der Temperatursensor (16) adaptiert ist, um die Temperatur des Bremsfluids im Bremsfluidreservoir (4) des Bremssystems (1) zu messen.

11. Bremssystem (1) nach Anspruch 10, wobei die elektronische Steuereinheit (13) adaptiert ist, um den Aktuator (7) so zu steuern, dass der Fluiddruck auf oder über den Öffnungsdruck des Überdruckventils (9) erhöht wird als Antwort auf die vom Temperatursensor (16) gemessene Temperatur des Bremsfluids, die einen zweiten Temperaturschwellenwert (T2) erreicht, der höher ist als der erste Temperaturschwellenwert (T1), und um den Druck nach einem zweiten vorbestimmten Zeitraum unter den Öffnungsdruck des Überdruckventils (9) zu reduzieren.

12. Abbaumaschine (2), umfassend das Bremssystem (1) nach einem der Ansprüche 1-11.

## Revendications

1. Système de frein (1) pour une machine d'exploitation minière (2), ledit système de frein (1) comprenant :
au moins un frein à ressort à déblocage hydraulique (frein SAHR) (3),
un réservoir (4) de liquide de frein,
un premier circuit (6) de liquide raccordant fluidiquement le frein SAHR (3) au réservoir 4 de liquide de frein via un actionneur (7), ledit actionneur (7) étant adapté à commander une pression de liquide de frein dans le premier circuit (6) de liquide,
dans lequel le système de frein (1) comprend une soupape de décharge de pression (9),
**caractérisé en ce que** la soupape de décharge de pression (9) est adaptée à ouvrir une voie d'écoulement entre une entrée (10) de la soupape de décharge de pression (9) et une sortie (11) de la soupape de décharge de pression (9) en réponse au fait qu'une pression de liquide au niveau de l'entrée de la soupape de décharge de pression dépasse une pression d'ouverture supérieure à une pression de déblocage du frein SAHR (3), dans lequel la soupape de décharge de pression (9) est en outre adaptée à se fermer quand une pression de liquide au niveau de l'entrée (10) de la soupape de décharge de pression (9) est inférieure à la pression d'ouverture, et dans lequel l'entrée (10) de la soupape de décharge de pression (9) est raccordée fluidiquement au frein SAHR (3) de sorte que le frein SAHR (3) puisse être purgé par le biais de la soupape de décharge de pression (9).

2. Système de frein (1) selon la revendication 1, dans lequel le système de frein (1) comprend en outre un deuxième circuit (8) de liquide raccordant fluidiquement la sortie (11) de la soupape de décharge de pression (9) au réservoir (4) de liquide de frein.

3. Système de frein (1) selon la revendication 2, dans lequel le deuxième circuit (8) de liquide comprend un filtre (12) adapté à permettre au liquide de frein de passer à travers le filtre (12) et adapté à retenir des particules dans le liquide de frein.

4. Système de frein (1) selon la revendication 3, dans lequel le filtre (12) est conçu pour retenir des particules supérieures à 10 µm, telles que des particules supérieures à 20 µm.

5. Système de frein (1) selon l'une quelconque des revendications 1 à 4, dans lequel la soupape de décharge de pression (9) est adaptée à permettre à un débit de liquide d'au moins cinq litres par minute de passer à travers la soupape de décharge de pression (9) lorsque la pression au niveau de l'entrée de la soupape de décharge de pression (9) atteint sa pression d'ouverture.

6. Système de frein (1) selon l'une quelconque des revendications 1 à 5, comprenant en outre une unité de commande électronique (13) adaptée à commander l'actionneur (7) en réponse à un signal de commande pour ainsi commander la pression de liquide dans le premier circuit (6) de liquide.

7. Système de frein (1) selon la revendication 6, comprenant en outre un dispositif d'entrée (15) pouvant être actionné manuellement adapté à déclencher le signal de commande en réponse à l'actionnement manuel du dispositif d'entrée (15).

8. Système de frein (1) selon l'une quelconque des revendications 6 à 7, dans lequel l'unité de commande électronique (13) est adaptée à commander l'actionneur (7) de sorte que la pression de liquide soit augmentée jusqu'à, ou au-dessus de, la pression d'ouverture de la soupape de décharge de pression (9) à intervalles réguliers et/ou selon un calendrier prédéterminé.

9. Système de frein (1) selon l'une quelconque des revendications 6 à 8, comprenant en outre un capteur de température (16) adapté à mesurer une température de liquide de frein dans le système de frein (1), dans lequel l'unité de commande électronique (13) est adaptée à commander l'actionneur (7) de sorte que la pression de liquide soit augmentée jusqu'à, ou au-dessus de, la pression d'ouverture de la soupape de décharge de pression (9) en réponse au fait que la température du liquide de frein mesurée par le capteur (16) atteint un premier seuil de température (T1), et à réduire la pression en dessous de la pression d'ouverture de la soupape de décharge de pression (9) après une première période prédéterminée.

10. Système de frein (1) selon la revendication 9, dans lequel le capteur de température (16) est adapté à mesurer la température du liquide de frein dans le réservoir (4) de liquide de frein du système de frein (1).

11. Système de frein (1) selon la revendication 10, dans lequel l'unité de commande électronique (13) est adaptée à commander l'actionneur (7) de sorte que la pression de liquide soit augmentée jusqu'à, ou au-dessus de, la pression d'ouverture de la soupape de décharge de pression (9) en réponse au fait que la température du liquide de frein mesurée par le capteur de température (16) atteint un deuxième seuil de température (T2) supérieur au premier seuil de température (T1), et à réduire la pression en dessous de la pression d'ouverture de la soupape de décharge de pression (9) après une deuxième période prédéterminée.

12. Machine d'exploitation minière (2) comprenant le système de frein (1) selon l'une quelconque des revendications 1 à 11.
